**Europäisches Patentamt**

**European Patent Office**

**Office européen des brevets**

(11) Veröffentlichungsnummer: **0 370 315 A2**

# (12) EUROPÄISCHE PATENTANMELDUNG

(21) Anmeldenummer: **89120740.9**

(22) Anmeldetag: **09.11.89**

(51) Int. Cl.⁵: **H04N 7/137**

(30) Priorität: **24.11.88 DE 3839642**

(43) Veröffentlichungstag der Anmeldung:
**30.05.90 Patentblatt 90/22**

(84) Benannte Vertragsstaaten:
**AT CH DE ES FR GB IT LI SE**

(71) Anmelder: **ROBERT BOSCH GMBH**
**Postfach 10 60 50**
**D-7000 Stuttgart 10(DE)**

(72) Erfinder: **Vogt, Wilhelm**
**Stadtweg 8**
**D-4791 Herbram(DE)**
Erfinder: **Biere, Dietmar, Dr.**
**Magdalenenweg 27**
**D-3200 Hiidesheim(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) **Einrichtung zur Codierung von Videosignalen.**

(57) Bei einer Einrichtung zur Codierung von Videosignalen, insbesondere für ein Schmalband-Bildtelefon, wobei in einer DPCM-Schleife ein Filter vorgesehen ist, erfolgt in Abhängigkeit von den jeweiligen Prädiktionsfehlern die Codierung aufgrund von gefilterten oder ungefilterten Prädiktionswerten.

Fig. 1

EP 0 370 315 A2

## Einrichtung zur Codierung von Videosignalen

Die Erfindung geht aus von einer Einrichtung zur Codierung von Videosignalen nach der Gattung des Hauptanspruchs.

Zur Übertragung von Bildern, beispielsweise beim Schmalband-Bildtelefon, sind verschiedene datenreduzierende Codierverfahren bekannt geworden. Einen wesentlichen Beitrag zur Datenreduktion liefert dabei eine Interframe-DPCM. Eine weitere Reduktion der zu übertragenden Daten ist durch eine blockweise Codierung möglich. Dabei durchlaufen die zu codierenden Signale blockweise eine Prädiktionsschleife, in welcher zur Verkleinerung des Prädiktionsfehlers ein Schleifenfilter eingefügt sein kann. Dieses liefert damit einen weiteren Beitrag zur Verringerung der zu übertragenden Datenmenge.

Aufgabe der vorliegenden Erfindung ist es, eine Einrichtung zur Codierung von Videosignalen vorzuschlagen, welche eine weitere Verringerung der zu übertragenden Datenrate ermöglicht.

Die Einrichtung mit den kennzeichnenden Merkmalen des Hauptanspruchs hat den Vorteil, daß eine Codierung mit Filterung oder ohne Filterung je nachdem erfolgt, was für den jeweils vorliegenden Bildinhalt günstiger ist. Dabei ist vorzugsweise ein Filter mit Tiefpaßcharakteristik sowohl in vertikaler als auch horizontaler Richtung vorgesehen. Je nach Gegebenheiten im einzelnen können jedoch auch andere Filter verwendet werden. Ferner kann im Rahmen der Erfindung auch ein Wechsel zwischen verschiedenen Filtern vorgesehen sein.

Durch die in den Unteransprüchen aufgeführten Maßnahmen sind vorteilhafte Weiterbildungen und Verbesserungen der im Hauptanspruch angegebenen Erfindung möglich.

Insbesondere sind Maßnahmen angegeben, welche eine günstige schaltungstechnische Realisierung der erfindungsgemäßen Einrichtung ermöglichen. Weitere Maßnahmen dienen zur weiteren Anpassung der Codierung an den jeweils vorliegenden Bildinhalt. Schließlich werden Maßnahmen angegeben, die eine Anpassung des zeitlichen Ablaufs innerhalb der erfindungsgemäßen Einrichtung an die durch andere Teile der Prädiktionsschleife gegebenen Verhältnisse ermöglicht.

Die erfindungsgemäße Einrichtung und deren Weiterbildungen eignen sich vorzugsweise für eine blockweise Codierung. Dabei wird im Rahmen der Erfindung auch berücksichtigt, daß erst die Prädiktionsfehler aller Bildelemente des jeweiligen Blocks vorliegen müssen, damit eine Entscheidung über die Art der Codierung getroffen werden kann.

Ausführungsbeispiele der Erfindung sind in der Zeichnung anhand mehrerer Figuren dargestellt und in der nachfolgenden Beschreibung näher erläutert. Es zeigt:

Fig. 1 ein Blockschaltbild einer Sendeeinrichtung für ein Schmalband-Bildtelefon,

Fig. 2 ein Blockschaltbild eines Teils einer Sendeeinrichtung in erfindungsgemäßer Ausführung,

Fig. 3 ein Blockschaltbild einer Schaltungsanordnung für die erfindungsgemäße Einrichtung,

Fig. 4 einen Ablaufplan eines Programms für die in der Schaltung nach Fig. 4 enthaltenen Signalprozessoren und

Fig. 5 eine Tabelle zur weiteren Veranschaulichung der Erfindung.

Gleiche Teile sind in den Figuren mit gleichen Bezugszeichen versehen.

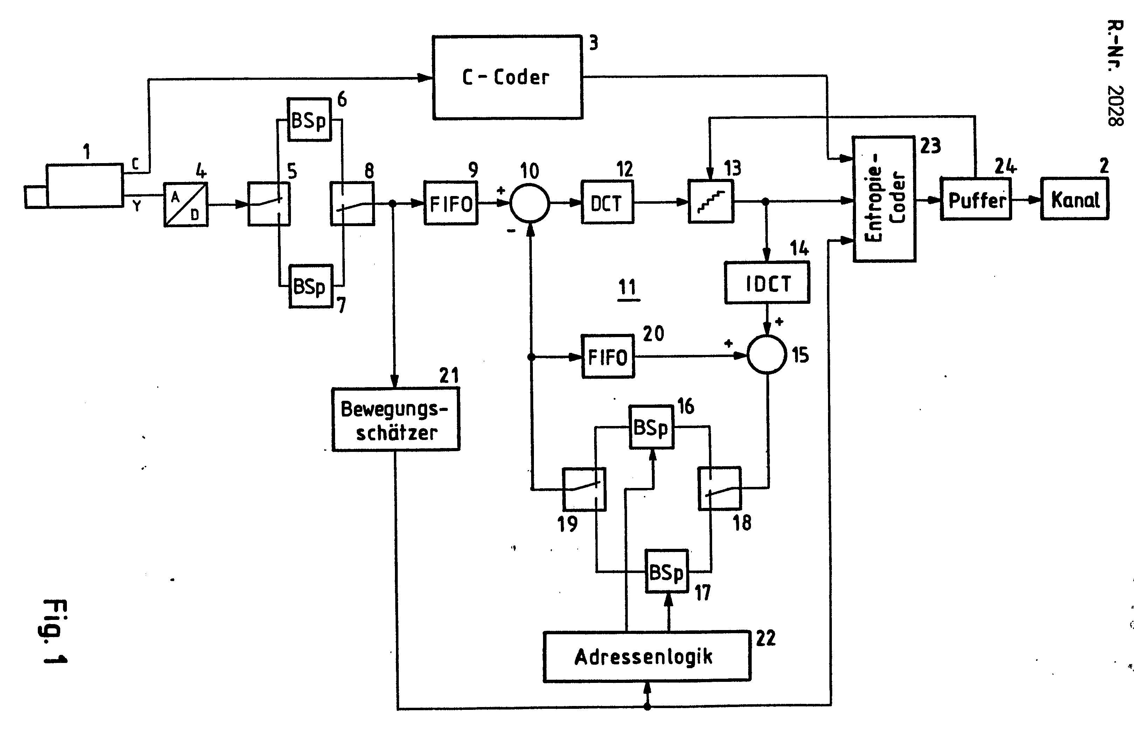

Die in Fig. 1 dargestellte Schaltungsanordnung stellt eine Sendeeinrichtung für ein Schmalband-Bildtelefon dar, wobei die Ausgangssignale einer Videokamera 1 analog/digital-gewandelt und anschließend unter Anwendung datenreduzierender Verfahren derart codiert werden, daß sie über einen schmalbandigen Kanal 2 zu einem Empfänger übertragen werden können. Die im Zusammenhang mit der Schaltungsanordnung nach Fig. 1 genannten Zahlenangaben beziehen sich auf die sogenannte CIF-Auflösung von 360 x 288 Bildelementen für den Luminanzanteil und von jeweils 180 x 144 Bildelementen für die Chrominanzanteile U, V. Die Kapazität des Übertragungskanals 2 beträgt 64000 Bit/s.

Zur Reduzierung des Datenstroms tragen im wesentlichen die folgenden bekannten Verfahren bei: Reduzierung der Bewegungsauflösung (es wird nur jedes dritte Bild übertragen), DPCM (Interframe), diskrete Cosinus-Transformation (DCT), adaptive Quantisierung und Entropie-Codierung. Ferner ist eine Umschaltung auf eine Intraframe-Codierung vorgesehen.

Die Codierung des Luminanzsignals wird im folgenden anhand einzelner Funktionseinheiten erläutert, während die Codierung der Chrominanzsignale U, V nur durch eine Funktionseinheit 3 dargestellt ist, da diese Codierung in ähnlicher Weise wie die Codierung des Luminanzsignals Y erfolgt.

Die Ausgangssignale des Analog/Digital-Wandlers 4 werden über einen Umschalter 5 bildweise abwechselnd in einen von zwei Bildspeichern 6, 7 eingeschrieben. Durch entsprechende Steuerung eines weiteren Umschalters 8 sowie im einzelnen nicht dargestellte Adressierung beim Auslesen wird jedes dritte Bild aus den Speichern 6, 7 ausgelesen, so daß sich bereits eine Datenreduktion um den Faktor 3 ergibt.

Nach einer Zwischenspeicherung zur Zeitanpassung in einem FIFO-Speicher 9 gelangen die Signale zu einer Subtraktionsschaltung 10, welche Teil einer Prädiktionsschleife 11 ist. In einer Schaltung 12 zur diskreten Cosinus-Transformation werden die Ausgangssignale der Subtraktionsschaltung - also die Differenzen zwischen dem jeweils von der Kamera erzeugten Signal und dem Signal eines gespeicherten Bildes - blockweise transformiert. Zu einem Block gehören jeweils n Bildelemente aus n aufeinanderfolgenden Zeilen, die eine Teilfläche des Bildes von n x n Bildelementen darstellen. Meistens werden Blöcke der Größe 8 x 8 Bildelemente vorgeschlagen. Bei der Realisierung der Erfindung haben sich für die Luminanz Blöcke von 16 x 16 Bildelementen und für die Chrominanz jeweils 8 x 8 Bildelemente große Blöcke als günstig herausgestellt.

Da die diskrete Cosinus-Transformation an sich bekannt ist (siehe Ahmed N., Natarajan T. und Rao R.: Discrete Cosine Transform, IEEE Transactions C-23 (1974), Seiten 90 bis 93), sei im folgenden nur kurz erwähnt, daß durch die diskrete Cosinus-Transformation jeweils für einen Block aus n x n Bildelementen Koeffizienten ermittelt werden, welche dem Gleichanteil des Signals (also der mittleren Helligkeit), der Amplitude einer Grundwelle, deren Periode der doppelten Blocklänge entspricht, und den Amplituden der Oberwellen entsprechen. Je nach Bildinhalt nimmt die Amplitude der Oberwellen mit der Ordnungszahl der jeweiligen Oberwelle mehr oder weniger stark ab, so daß für einen großen Anteil der Blöcke nur der Gleichanteil, die Grundwelle und/oder wenige Oberwellen zu übertragen sind.

Die Ausgangssignale der Schaltung 12 werden einem steuerbaren Quantisierer 13 zugeführt, der in Abhängigkeit von einem zugeführten Steuersignal eine gröbere oder feinere Quantisierung vornehmen kann. Die quantisierten Signale werden dann innerhalb der Prädiktionsschleife 11 einer Schaltung 14 zur inversen diskreten Cosinus-Transformation zugeleitet und über eine Addierschaltung 15 in weitere Bildspeicher 16, 17 eingelesen. Die Bildspeicher 16, 17 stellen einen Prädiktionsspeicher dar. Es werden zwei Bildspeicher verwendet, um ein Lesen zu ermöglichen, während neue Signale eingeschrieben werden. Dazu werden die Umschalter 18, 19 entsprechend gesteuert. Die aus dem Prädiktionsspeicher 16, 17 ausgelesenen Signale gelangen zur Subtraktionsschaltung 10 und über einen zur Zeitanpassung dienenden FIFO-Speicher 20 zur Addierschaltung 15.

Um eine genauere Prädiktion auch bei bewegten Bildern zu erhalten, ist ein Bewegungsschätzer 21 vorgesehen, der durch Vergleich aufeinanderfolgender Bilder jeweils für einen Block einen Bewegungsvektor erzeugt. Die Bewegungsvektoren werden einer Adressierlogik 22 zugeführt, so daß beim blockweisen Lesen der Signale aus dem Prädiktionsspeicher 16, 17 bereits eine durch Bewegung verursachte Verschiebung des Inhalts des jeweiligen Blocks zwischen dem gespeicherten und dem jeweils aktuellen Bild berücksichtigt wird.

Die Ausgangssignale des Quantisierers 13, des Coders 3 für die Chrominanzsignale U, V sowie die Ausgangssignale des Bewegungsschätzers 21 werden einem Entropie-Coder 23 zugeführt, bei welchem eingehende Codewörter entsprechend der Häufigkeit ihres Auftretens in kürzere bzw. längere ausgehende Codewörter gewandelt werden.

Da die durch die Codierung entstehenden Daten je nach Auftreten von Bewegung und Details im aufgenommenen Bild unregelmäßig anfallen, ist ein Pufferspeicher 24 vor der Übertragungsstrecke 2 vorgesehen, der beispielsweise die Kapazität eines Bildes aufweist. Droht der Pufferspeicher 24 überzulaufen, so wird die dem Puffer zugeführte Datenmenge reduziert, was insbesondere durch eine entsprechende Steuerung des Quantisierers 13 erfolgen kann.

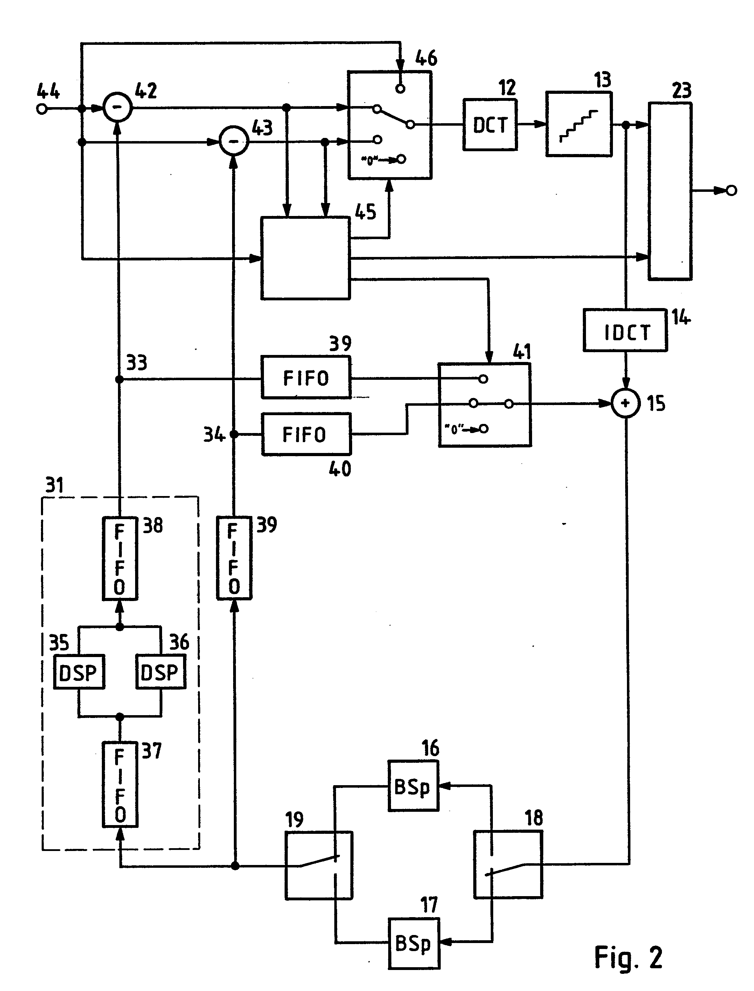

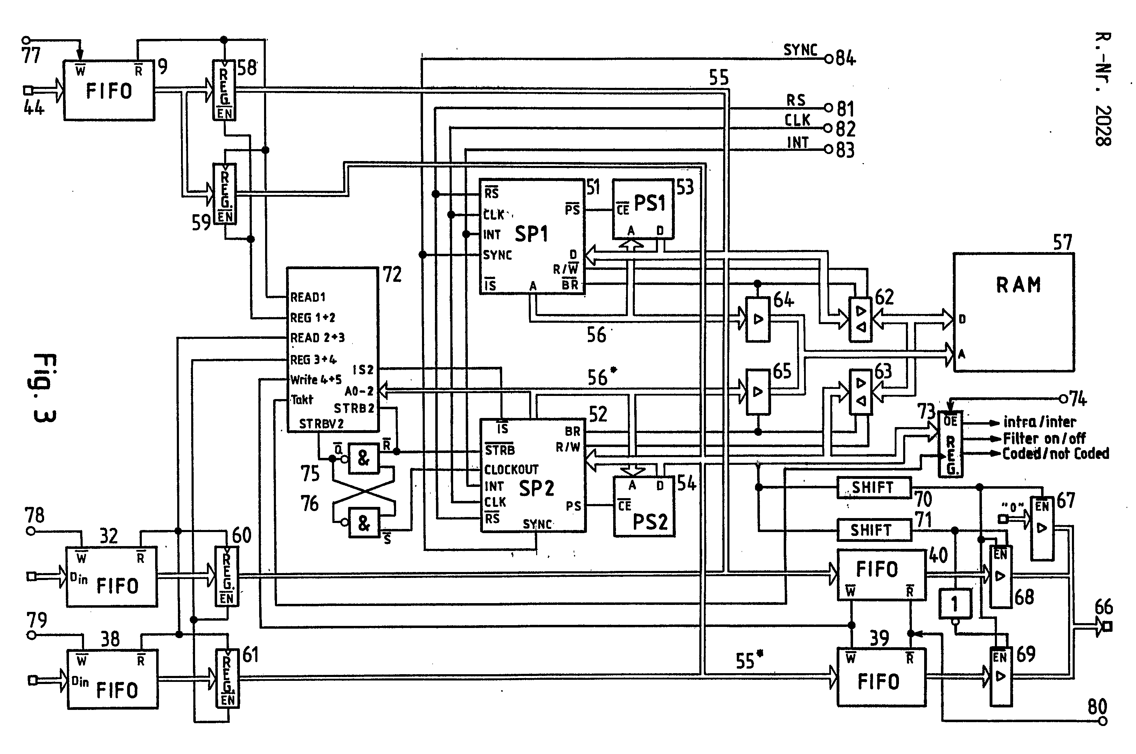

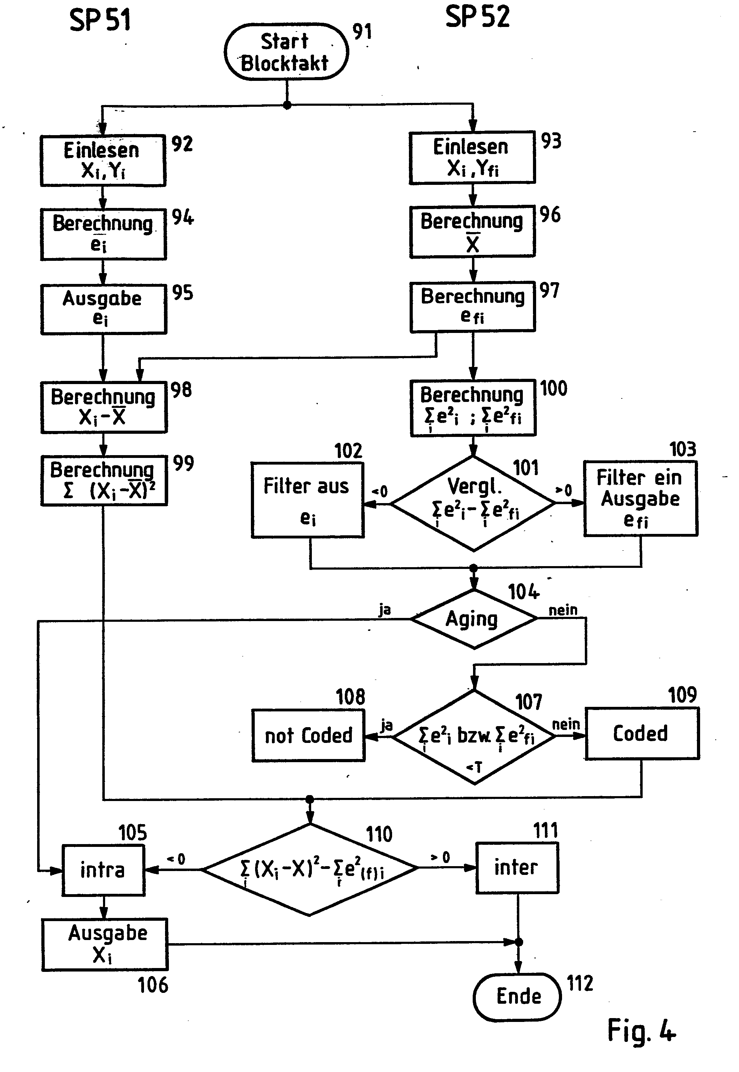

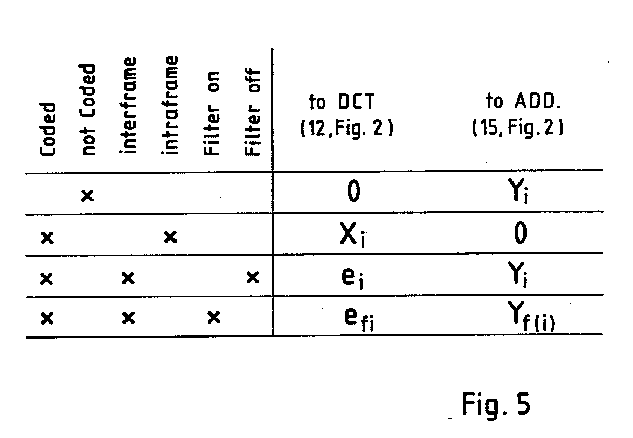

In Fig. 2 ist das Ausführungsbeispiel nach Gesichtspunkten der Übersichtlichkeit in Funktionsblöcke aufgeteilt, die je nach der vorgesehenen Realisierung mit elektronischen ( Baugruppen (beispielsweise integrierten Schaltungen), was bei der in Fig. 3 dargestellten Realisierung mit Signalprozessoren der Fall ist.

Die aus den Bildspeichern 16, 17 jeweils ausgelesenen Prädiktionswerte werden einerseits über ein Filter 31 und andererseits über einen FIFO-Speicher 32 weitergeleitet. Somit stehen an den Schaltungspunkten 33, 34 gefilterte und ungefilterte Prädiktionswerte zur Verfügung. Das Filter 31 kann gemäß der von der Anmelderin eingereichten Patentanmeldung P 38 37 329.7 in vorteilhafter Weise mit Hilfe von zwei digitalen Signalprozessoren 35, 36 und zwei FIFO-Speichern 37, 38 gebildet sein. Es sind jedoch für die erfindungsgemäße Einrichtung auch andere Filterschaltungen anwendbar. Von den Schaltungspunkten 33, 34 gelangen die Prädiktionswerte über weitere FIFO-Speicher 39, 40 und über einen steuerbaren Umschalter 41 zur Addierschaltung 15. Die FIFO-Speicher dienen in erster Linie zur Verzögerung der aus den Bildspeichern 16, 17 ausgelesenen Prädiktionswerte, so daß sie an der Addierschaltung 15 bzw. an den Subtrahierschaltungen 42, 43 zu geeigneten Zeitpunkten anliegen.

In den Subtrahierschaltungen 42, 43 wird gleichzeitig jeweils die Differenz zwischen den bei 44 zugeführten Videosignalen und den gefilterten bzw. ungefilterten Prädiktionswerten ermittelt.

In einer Steuerschaltung 45 werden die Ausgangssignale der Subtrahierschaltungen 42, 43 und die dem Eingang 44 zugeführten Videosignale im Sinne einer Optimierung der Codierung ausgewertet. Die Einzelheiten dazu werden später anhand der Figuren 3 bis 5 erläutert. Die Steuerschaltung 45 steuert den Umschalter 41 und einen weiteren Umschalter 46. Außerdem werden von der Steuerschaltung Signale dem Coder 23 zugeführt, welche zusammen mit den schmalbandigen digitalen Videosignalen zum Empfänger übertragen werden und den dortigen Decoder in entsprechender Weise wie die Schaltungsanordnung nach Fig. 2 steuern.

Die Ausgangssignale der Subtrahierschaltungen stellen Prädiktionsfehler dar, wobei jeweils eines der Ausgangssignale in codierter Form zum Empfänger übertragen wird. Außer dieser Interframe-Codierung kann eine Intraframe-Codierung vorgenommen werden, zu welcher der Umschalter 46 in die obere Stellung gebracht wird, so daß die bei 44 zugeführten Videosignale direkt codiert werden. Der Addierschaltung 15 werden dabei keine Prädiktionswerte zugeführt, wozu der Umschalter 41 in die untere Stellung gesetzt wird. In einem anderen Betriebsfall wird nicht codiert, wozu der Umschalter 46 in die untere Stellung gebracht wird, so daß keine Daten zum Coder gelangen. Der Addierschaltung 15 werden dann die ungefilterten Daten zugeführt.

Bei der Schaltungsanordnung nach Fig. 3 wird die Funktion der Subtrahierschaltung 42, 43, des Umschalters 46 und der Steuerschaltung 45 von zwei Signalprozessoren 51, 52 wahrgenommen. Derartige Signalprozessoren sind als integrierte Schaltungen auf dem Markt erhältlich. Für die erfindungsgemäßen Zwecke eignet sich beispielsweise eine integrierte Schaltung vom TYP TMS 320C25. Jedem der Signalprozessoren ist ein Programmspeicher 53, 54 zugeordnet. Die Eingabe sowie die Ausgabe von Daten in die Signalprozessoren 51, 52 bzw. aus den Signalprozessoren erfolgt über zwei Datenbusse 55, 55*. In den Signalprozessoren 51, 52 erzeugte Adressen werden über zwei Adressenbusse 56, 56* den Programmspeichern 53, 54 sowie über einen Multiplexer 64, 65 einem Schreib-Lese-Speicher 57 zugeführt.

Aus den FIFO-Speichern 9, 32, 38 werden die Bilddaten und die ungefilterten und die gefilterten Daten über Register 58, 59, 60, 61 und über die Datenbusse 55, 55* in die Signalprozessoren 51, 52 eingelesen. Der Schreib-Lese-Speicher 57 dient zur Übergabe von Daten in die Schaltung 12 und ist in nicht dargestellter Weise mit der Schaltung 12 verbunden. Er dient ferner zur vorübergehenden Speicherung von Zwischenergebnissen und ist deshalb über zwei bidirektionale Bustreiber 62, 63 mit den Datenbussen 55, 55* verbunden. Jeder der beiden Signalprozessoren 51 bzw. 52 kann auf den Schreib-Lese-Speicher 57 zugreifen, wozu jeweils ein Bustreiber 64 bzw. 65 den Adressenbus 56 bzw. 56* durchschaltet. Über die FIFO-Speicher 39, 40 werden die ungefilterten und die gefilterten Daten einem Ausgang 66 zugeleitet, der mit der Addierschaltung 15 (Fig. 2) verbunden ist. Bustreiber 67, 68, 69 entsprechen in ihrer Funktion dem Umschalter 41 (Fig. 2). Zur zeitrichtigen Steuerung der Bustreiber 67 bis 69 dienen zwei Schieberegister 70, 71.

Zur Steuerung des Datenverkehrs zwischen den FIFO-Speichern und den Signalprozessoren ist als Steuerschaltung eine programmierbare Logikschaltung 72 vorgesehen, welche für die FIFO-Speicher 9, 32, 38 Lesesteuersignale (Read 1, Read 2 + 3) erzeugt, die den Registern 58 bis 61 auch als Taktimpulse dienen. Ferner erzeugt die Steuerschaltung 72 Steuersignale für die Register und ein Schreibsignal für die FIFO-Speicher 39, 40. Schließlich wird mit Hilfe der Steuerschaltung 72 ein Taktsignal abgeleitet, das dem Register 73 zugeführt wird, in welches Informationen über die Art der Codierung eingeschrieben werden, die von dem Coder 23 (Fig. 2) abgerufen werden können. Dazu wird dem Register 73 ein Steuersignal über einen Eingang 74 vom Coder 23 zugeführt. Die Steuerschaltung 72 erhält Taktimpulse vom Signalprozessor 52 einerseits direkt (STRB2) und andererseits über zwei als Impulsformer geschaltete Nicht-Und-Schaltungen 75, 76 (STRBV2).

Das Einschreiben der Signale in die FIFO-Speicher 9, 32, 38 erfolgt jeweils mit einem Schreibsteuersignal, das über Eingänge 77, 78, 79 von der jeweils vorangegangenen Schaltung zugeführt wird. Zum Auslesen aus den FIFO-Speichern 39, 40 dient ein Lesesteuersignal, das von einer den Bildspeichern 16, 17 zugeordneten Steuerschaltung über den Eingang 80 zugeführt wird.

Über Eingänge 81 und 84 erhalten die Signalprozessoren 51, 52 beim Einschalten der Schaltung ein Rücksetzsignal RS und ein Synchronisationssignal SYNC. Ferner wird über einen weiteren Eingang 82 den Signalprozessoren ein Taktsignal CLK zugeführt. Jeweils zu Beginn eines Blocks wird mit Hilfe eines Signals INT (Eingang 83) in den Signalprozessoren ein Interrupt ausgelöst, was die Verarbeitung der zu dem jeweiligen Block gehörenden Signale zur Folge hat. Die Erzeugung dieser Signale ist an sich bekannt und braucht zur Erläuterung der Erfindung nicht näher ausgeführt zu werden. Im Zusammenhang mit dem Signal INT wird auf die von der Anmelderin eingereichten Patentanmeldung P 38 27 219.9 hingewiesen, in welcher eine Schaltungsanordnung beschrieben ist, mit der Taktimpulsfolgen für einzelne Funktionseinheiten eines Schmalband-Bildtelefons erzeugt werden.

Im folgenden wird anhand des Ablaufplans gemäß Fig. 4 die Funktion der Schaltungsanordnung nach Fig. 3 erläutert. Dabei sind in der linken Spalte Programmteile des Signalprozessors 51 und in der rechten Spalte Programmteile des Signalprozessors 52 aufgeführt. Zum Start des Programms bei 91 wird das Signal INT den Signalprozessoren 51, 52 zugeführt. Danach werden im Programmteil 92 Daten $X_i$ und $Y_i$ aus den FIFO-Speichern 9 und 32 in den Signalprozessor 51 eingelesen. Bei 93 werden aus den FIFO-Speichern 9 und 38 Daten $X_i$ und $Y_{fi}$ eingelesen. Dabei bedeutet i die Nummer des jeweiligen Bildelementes innerhalb eines Blocks. Bei einem Block aus 16 mal 16 Bildelementen kann i dementsprechend die Werte 0 bis 255 einnehmen. Im Signalprozessor 51 wird danach im Programmteil 94 jeweils für einen Bildpunkt der Prädiktionsfehler $e_i$ berechnet und bei 95 an den Schreib-Lese-Speicher 57 ausgegeben. Im Signalprozessor 52 werden zunächst im Programmteil 96 der Mittelwert $\overline{X}$ über einen Block und anschließend bei 97 die Prädiktionsfehler $e_{fi}$ der Bildelemente der gefilterten Prädiktionswerte berechnet. Der Mittelwert $\overline{X}$ wird vom Signalprozessor 51 übernommen, worauf bei 98 bildelementweise die Differenz $X_i - \overline{X}$ und daraus bei 99 die Varianz nach der in Fig. 4 angegebenen Gleichung berechnet wird.

Im Programmteil 100 liest der Signalprozessor 52 aus dem Schreib-Lese-Speicher 57 die Prädiktionsfehler $e_i$ für die ungefilterten Prädiktionswerte aus und berechnet die Varianz der Prädiktionsfehler der gefilterten und der ungefilterten Prädiktionswerte für jeweils einen Block. Bei 101 werden beide Varianzen verglichen, worauf das Programm entsprechend verzweigt wird. Diejenigen Prädiktionsfehler, welche eine kleinere Varianz ergeben, werden bei 102 bzw. 103 ausgegeben. Dazu werden die entsprechenden Werte im Schreib-Lese-Speicher 57 zum späteren Abruf durch die Schaltung 12 (Fig. 2) zur Verfügung gestellt. Außerdem wird durch die Ansteuerung des entsprechenden Bustreibers 68 oder 69 das Lesen der entsprechenden Daten aus dem FIFO-Speicher 39 oder 40 ermöglicht.

Wie bereits erwähnt, kann mit dem dargestellten Ausführungsbeispiel in Abhängigkeit von dem jeweiligen Bildinhalt eine Intraframe- oder eine Interframe-Codierung vorgenommen werden. Um jedoch derartige Fehler zu begrenzen, ist bei dem Ausführungsbeispiel ein Verfahren vorgesehen, das Aging genannt wird. Dazu wird im Programmteil 104 abgefragt, ob der jeweils bearbeitete Block bereits einer vorgegebenen Anzahl von Interframe-Codierungen unterworfen war. Dazu ist jedem Block ein Zähler zugeordnet, der bei jeder Interframe-Codierung inkrementiert wird. Sobald - wie später beschrieben wird - eine Intraframe-Codierung dieses Blocks erfolgt, wird der Zähler auf 0 zurückgesetzt. Sofern jedoch aus anderen Gründen vor dem Erreichen eines bestimmten Zählerstandes keine Intraframe-Codierung erfolgt, wird dennoch eine Intraframe-Codierung durchgeführt und der Zähler zurückgesetzt.

Das in Fig. 4 dargestellte Programm verzweigt sich dann bei 104 in Richtung auf den Programmteil 105, welcher eine Intraframe-Codierung durchführt, welche bei 106 eine Ausgabe der Daten $X_i$ zur Folge hat. Ist jedoch der vorbestimmte Zählerstand bei 104 noch nicht erreicht, wird das Programm bei 107 in Abhängigkeit davon verzweigt, ob die Varianz der gefilterten Prädiktionswerte bzw. der ungefilterten Prädiktionswerte kleiner als ein vorgegebener Schwellwert T ist. Dieses bedeutet nämlich, daß sich gegenüber dem entsprechenden Block des vorangegangenen Bildes nur geringe Änderungen ergeben haben, die eine Übertragung in Hinblick auf die geringe Übertragungskapazität nicht rechtfertigen. Der Schwellwert kann beispielsweise in Abhängigkeit vom Füllstand des Pufferspeichers 24 (Fig. 1) gesteuert werden, so daß bei relativ leerem Pufferspeicher - das heißt, wenn die Übertragung von anderen Blöcken nur wenig Kanalkapazität erfordert - auch bei geringen Änderungen eine Codierung erfolgt. Ist jedoch der Pufferspeicher 24 stärker gefüllt, so wird der Schwellwert T relativ groß werden.

Nach der Verzweigung 107 wird im Falle einer geringen Varianz bei 108 das Programm mit der Ausgabe von "not coded" an das Register 73 fortgesetzt, wobei keine Daten - weder Bilddaten noch Prädiktionsfehler - der Schaltung 12 und damit dem Coder 23 zugeführt werden. Ist jedoch die Varianz der Prädiktionsfehler $\geq$ T, wird bei 109 die Information "coded" an das Register 73 gegeben.

Bei 110 wird das Programm in Abhängigkeit davon verzweigt, ob die Varianz der Bilddaten oder die Varianz der Prädiktionsfehler kleiner ist. Weisen die Bilddaten $X_i$ eine kleine Varianz auf, werden bei 106 die Bilddaten $X_i$ ausgegeben. Ist jedoch die Varianz der Prädiktionsfehler kleiner, wird das Programm bei 111 fortgesetzt, indem entweder die Prädiktionsfehler $e_i$ der ungefilterten oder die Prädiktionsfehler $e_{fi}$ der gefilterten Prädiktionswerte entsprechend den Programmteilen 102 bzw. 103 über den Schreib-Lese-Speicher 57 zur Schaltung 12 gegeben werden. Nach den Programmteilen 106 und 111 wird das Programm bei 112 beendet. Für den Beginn des folgenden Blocks wird über den Eingang 83 wiederum ein Impuls INT zugeführt und das Programm bei 91 erneut gestartet.

Zur weiteren Veranschaulichung der Erfindung sind in der Tabelle nach Fig. 5 für die verschiedenen Codierungsarten, die Daten angegeben, welche zur diskreten Cosinus-Transformation (Schaltung 12 in Fig. 2) und zur Addierschaltung 15 geführt werden. Nicht in der Tabelle berücksichtigt ist ein Sonderfall, der eintritt, wenn der Pufferspeicher 24 vollläuft. Dann ist ein Umschalten auf eine Blockwiederholung schnellstens erforderlich. Dieses erfolgt dadurch, daß von der Schaltung 14 zur inversen diskreten Cosinus-Transformation die rücktransformierten Werte auf "0" gesetzt werden und daß die ungefilterten Prädiktionswerte über den FIFO-Speicher 40 zur Addierschaltung geleitet werden.

**Ansprüche**

1. Einrichtung zur Codierung von Videosignalen, insbesondere für ein Schmalband-Bildtelefon, wobei in einer DPCM-Schleife ein Filter vorgesehen ist, dadurch gekennzeichnet, daß in Abhängigkeit von den jeweiligen Prädiktionsfehlern die Codierung aufgrund von gefilterten oder ungefilterten Prädiktionswerten erfolgt.

2. Einrichtung nach Anspruch 1, dadurch gekennzeichnet, daß aus einem Prädiktionsspeicher ausgelesene Prädiktionswerte über das Filter (31) oder unter Umgehung des Filters (31) einer Subtrahierschaltung (10) und einer Addierschaltung (15) zuführbar sind.

3. Einrichtung nach Anspruch 2, dadurch gekennzeichnet, daß sowohl die gefilterten als auch die ungefilterten Prädiktionswerte zwischengespeichert werden, daß sowohl für die gefilterten als auch für die ungefilterten Prädiktionswerte Prädiktionsfehler berechnet werden, daß die Prädiktionsfehler verglichen werden, daß die zwischengespeicherten Prädiktionswerte mit kleineren Prädiktionsfehlern zur Addierschaltung (15) weitergeleitet und daß die kleineren Prädiktionsfehler codiert werden.

4. Einrichtung nach Anspruch 3, dadurch gekennzeichnet, daß zur Berechnung der Prädiktionsfehler der gefilterten und der ungefilterten Prädiktionswerte jeweils ein digitaler Signalprozessor (51, 52) vorgesehen ist.

5. Einrichtung nach Anspruch 3, dadurch gekennzeichnet, daß zur Zwischenspeicherung der gefilterten und der ungefilterten Prädiktionswerte FIFO-Speicher (32, 38, 39, 40) vorgesehen sind.

6. Einrichtung nach Anspruch 1, wobei eine blockweise Codierung erfolgt, dadurch gekennzeichnet, daß die Varianz der Prädiktionsfehler ($e_i$, $e_{fi}$) der Bildelemente jeweils eines Blocks für die gefilterten und die ungefilterten Prädiktionswerte berechnet wird und daß eine Codierung der Prädiktionsfehler (e) mit der kleineren Varianz erfolgt.

7. Einrichtung nach Anspruch 6, dadurch gekennzeichnet, daß ferner die Varianz der Bildelemente jeweils eines Blocks für die zu codierenden Videosignale berechnet wird, daß eine Intraframe-Codierung erfolgt, wenn die Varianz der zu codierenden Videosignale kleiner als die Varianzen der gefilterten und der ungefilterten Prädiktionswerte ist, und daß anderenfalls eine Interframe-Codierung erfolgt.

8. Einrichtung nach Anspruch 7, dadurch gekennzeichnet, daß ein Block ferner intraframe-codiert wird, wenn die entsprechenden Blöcke in einer vorgegebenen Anzahl von vorangegangenen Bildern interframe-codiert wurden.

9.' Einrichtung nach Anspruch 6, dadurch gekennzeichnet, daß weder die Videosignale noch die Prädiktionsfehler codiert werden, wenn die Varianz der Prädiktionsfehler kleiner als ein vorgegebener Wert ist.

R.-Nr. 2028

Fig. 1

R.-Nr. 2028

Fig. 2

R.-Nr. 2028

Fig. 3

R.-Nr. 2028

SP 51    SP 52

Start
Blocktakt — 91

Einlesen
$X_i, Y_i$ — 92

Einlesen
$X_i, Y_{fi}$ — 93

Berechnung
$\overline{e_i}$ — 94

Berechnung
$\overline{X}$ — 96

Ausgabe
$e_i$ — 95

Berechnung
$e_{fi}$ — 97

Berechnung
$X_i - \overline{X}$ — 98

Berechnung
$\sum_i e^2_i \; ; \sum_i e^2_{fi}$ — 100

Berechnung
$\sum_i (X_i - \overline{X})^2$ — 99

102
Filter aus
$e_i$

101
Vergl.
$\sum_i e^2_i - \sum_i e^2_{fi}$

$< 0$    $> 0$

103
Filter ein
Ausgabe
$e_{fi}$

104
Aging

ja    nein

108
not Coded

107
$\sum_i e^2_i$ bzw. $\sum_i e^2_{fi}$

ja    nein

$< T$

109
Coded

105
intra

$< 0$

110
$\sum_i (X_i - X)^2 - \sum_i e^2_{(f)i}$

$> 0$

111
inter

Ausgabe
$X_i$ — 106

Ende — 112

Fig. 4

R.-Nr. 2028

| Coded | not Coded | interframe | intraframe | Filter on | Filter off | to DCT (12,Fig. 2) | to ADD. (15,Fig. 2) |
|---|---|---|---|---|---|---|---|
|  | × |  |  |  |  | $0$ | $Y_i$ |
| × |  |  | × |  |  | $X_i$ | $0$ |
| × |  | × |  |  | × | $e_i$ | $Y_i$ |
| × |  | × |  | × |  | $e_{fi}$ | $Y_{f(i)}$ |

Fig. 5